# EUROPEAN PATENT APPLICATION

(11) **EP 4 455 914 A1**
(43) Date of publication of application: **30.10.2024**
(21) Application number: 23170130.1
(22) Date of filing: 26.04.2023
(51) Int. Cl.: G06F 21/55, G06F 21/56

(54) **METHOD FOR SECURING AT LEAST ONE APPLICATION ASSOCIATED TO AN APPLICATION PROTECTION AGENT, CORRESPONDING COMPUTER PROGRAM PRODUCT AND DEVICES**

(71) Applicant: Nagravision Sarl, 1033 Cheseaux-sur-Lausanne (CH)
(72) Inventor: AVIOLAT, Romain, 1033 CHESEAUX-SUR-LAUSANNE (CH); RUIZ, Cristian, 1033 CHESEAUX-SUR-LAUSANNE (CH); KONDAH, Mouad, 1033 CHESEAUX-SUR-LAUSANNE (CH)
(74) Representative: Ipside

(57) **Abstract**

A method is proposed for securing at least one application operated in a first server communicatively connected to a second server. An application protection agent of a RASP type is associated to the application in the first server. A second security agent is implemented in the second server. According to such method, a first security agent implemented in the first server executes:
- receiving (S430), from the application protection agent, at least one first information indicative that a threat has been detected in the application by the application protection agent; and
- sending (S440), to the second security agent, the at least one first information.

## Description

### 1. FIELD OF THE DISCLOSURE

The field of the disclosure is that of the execution of applications on electronic devices such as servers.

More specifically, the disclosure relates to a method for securing such applications.

The disclosure can be of interest in any field wherein such applications are subject to threats. This is the case for instance for applications running in an environment in communication with the internet (web-applications).

### 2. TECHNOLOGICAL BACKGROUND

Security controls for applications, e.g. web-applications, are mostly reactive today, such as updating vulnerable libraries and patching operating systems when vulnerabilities are discovered. There may be a gap between the moment the vulnerability is discovered and the time it is fixed, depending on the vulnerability disclosure process followed and the vendor's response. Public disclosure of a Zero-Day vulnerability without prior communication with the vendor can have a significant impact on publicly exposed services and applications.

This reactive approach leaves engineers always one step behind bad actors, which makes catching Zero-Days as hard as it is. For instance, certain vulnerabilities are kept private and are for sale on the darkweb. Threats actors with financial support (state-sponsored or ransomware gangs) can exploit these vulnerabilities often for extended periods of time without being noticed.

Moreover, most applications cannot protect themselves, so people who deploy them in production usually rely on external controls, again, controls that are reactive, such as Web Application Firewalls (WAF). Even though coding languages offer secure ways to perform certain actions, such as sanitizing user input or executing secure deserialization, these controls are not mandatory, so developers often overlook them, leaving their applications vulnerable to a broad subset of Open Web Application Security Project (OWASP) top 10 vulnerabilities. Furthermore, external controls like WAFs can sometimes be bypassed using different techniques, like encoding the payload differently or wrapping the attack payload around special characters.

The problems highlighted above can be mitigated using Runtime Application Self Protection (RASP) techniques. However, RASP is hard to implement and to operate. RASP is not a plug-and-play technology; it requires a full cycle of validation with existing applications to ensure functionality and performance are not adversely affected. Moreover, such RASP solutions require deep understanding of threats.

There is thus a need for a solution for improving the security of applications, even when such application is associated to a protection agent, e.g. of the RASP type.

### 3. SUMMARY

A particular aspect of the present disclosure relates to a method for securing at least one application operated in a first server communicatively connected to a second server. An application protection agent of a RASP type is associated to the application in the first server. A second security agent is implemented in the second server. According to such method, a first security agent implemented in the first server executes:
- receiving, from the application protection agent, at least one first information indicative that a threat has been detected in the application by the application protection agent; and
- sending, to the second security agent, the at least one first information.

Thus, the present disclosure proposes a new and inventive solution for improving the security of applications even when such application is associated to a protection agent, e.g. of the RASP type.

More particularly, the implementation of the first security agent in the server the application is implemented in allows receiving (e.g. through polling of the application protection agent) information indicative that a threat has been detected by the application protection agent in the application. Such information can be sent to the second security agent for further actions to be taken for protecting the application.

In some embodiments, the first security agent executes: receiving, from the application protection agent, at least one second information representative of an operation state of the application and/or of an operation state of the application protection agent.

For instance, the operation state is indicative that the application and/or the application protection agent is still alive.

In some embodiments, the receiving, from the application protection agent, at least one second information is executed responsive to sending, to the application protection agent, a request for the at least one second information.

In some embodiments, the sending, to the application protection agent, a request for the at least one second information is executed periodically.

For instance, the mechanism of sending the request and receiving the corresponding second information is performed through a polling scheme.

In some embodiments, the first security agent executes: sending, to the second security agent, the at least one second information.

Thus, the second security agent has the knowledge of the second information e.g. for further actions to be taken for protecting the application.

In some embodiments, the first security agent executes:
- receiving, from the second security agent, security rules; and
- sending, to the application protection agent, the security rules.

The at least one first information is indicative that a threat has been detected in the application by the application protection agent based on the security rules.

Thus, the security rules to be used by the application protection agent can be updated quickly in a proactive way (e.g. at any time) or in a reactive way (e.g. after a threat has been detected by the application protection agent in the application).

According to such method, the second security agent implemented in the second server executes, for the at least one application:
- receiving, from the first security agent, at least one first information indicative that a threat has been detected in the application by the application protection agent; and
- sending, to a network protection agent of the first server or to an operating system operating the application, an alert information indicative that a threat has been detected in the application.

For instance, the network protection agent is an Application Programming Interface (API) gateway or a firewall.

In some embodiments, the second security agent executes: receiving, from the first security agent, at least one second information representative of an operation state of the application and/or of an operation state of the application protection agent.

Thus, the second security agent can decide actions to be taken for protecting the application relying on more information about the application and/or the application protection agent.

In some embodiments, the second security agent executes: analyzing the at least one first information and/or the at least one second information delivering a decision information indicative of a decision about the reality of the threat in the application. The sending an alert information is executed when the decision information is indicative that it has been decided that the threat in the application is real.

Thus, a false alarm can be avoided based on such analysis. For instance, the analysis implements a forensic analysis of the first information and/or second information.

In some embodiments, the second security agent executes: sending, to the first security agent, security rules. The at least one first information is indicative that a threat has been detected in the application by the application protection agent based on the security rules.

Another aspect of the present disclosure relates to a computer program product comprising program code instructions for implementing the above-mentioned method for securing at least one application associated to an application protection agent (in any of the different embodiments discussed above), when the program is executed on a computer or a processor.

Another aspect of the present disclosure relates to an electronic device comprising means configured for executing all or part of the steps of the above-mentioned method for securing at least one application associated to an application protection agent as executed by the first security agent (in any of the different embodiments discussed above). Thus, the features and advantages of this device are the same as those of the corresponding steps of said method. Therefore, they are not detailed any further.

Another aspect of the present disclosure relates to an electronic device comprising means configured for implementing all or part of the steps of the above-mentioned method for securing at least one application associated to an application protection agent as executed by the second security agent (in any of the different embodiments discussed above). Thus, the features and advantages of this device are the same as those of the corresponding steps of said method. Therefore, they are not detailed any further.

Another aspect of the present disclosure relates to a server comprising an electronic device as discussed above (in any of the different embodiments discussed above).

### 4. LIST OF FIGURES

Other features and advantages of embodiments shall appear from the following description, given by way of indicative and non-exhaustive examples and from the appended drawings, of which:
- Figure 1 illustrates a plurality of first servers implementing an application, an application protection agent and a first security agent, the first servers being communicatively connected to a second server implementing a second security agent, according to one embodiment of the present disclosure;
- Figure 2 illustrates an example of the structural blocks of an electronic device allowing steps of the method of Figure 4 to be executed by the first servers of Figure 1 according to one embodiment of the present disclosure;
- Figure 3 illustrates an example of the structural blocks of an electronic device allowing steps of the method of Figure 4 to be executed by the second server of Figure 1 according to one embodiment of the present disclosure;
- Figure 4 illustrates a flowchart of a method for securing at least one application associated to an application protection agent according to one embodiment of the present disclosure.

### 5. DETAILED DESCRIPTION

In all of the figures of the present document, the same numerical reference signs designate similar elements and steps.

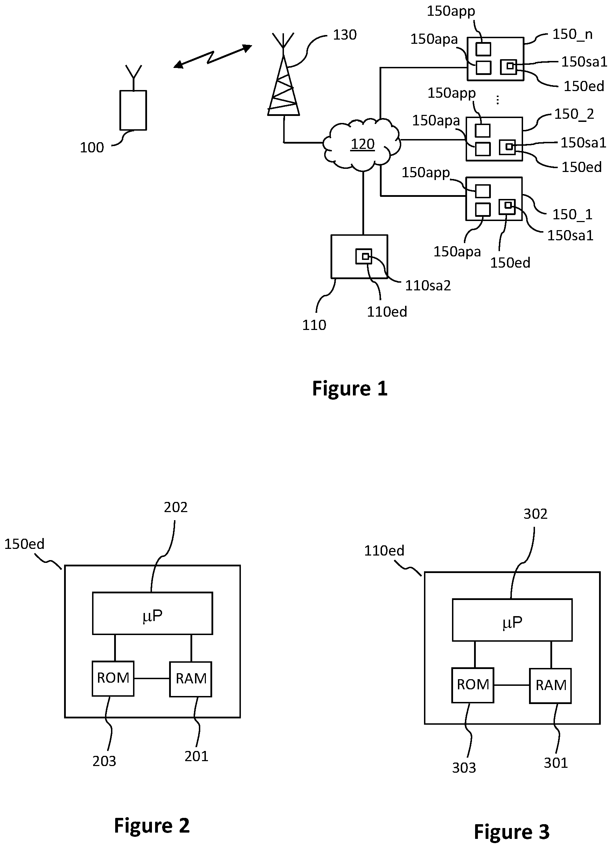

Referring now to **figure 1****,** we illustrate a plurality of first servers 150_1, 150_2, ..., 150_n implementing an application 150app, the first servers 150_1, 150_2, ..., 150_n being communicatively connected to a second server 110 according to one embodiment of the present disclosure.

More particularly, the first servers 150_1, 150_2, ..., 150_n are communicatively connected to the second server 110 through a wired communications link, e.g. a xDSL communications link implementing an internet protocol, going through a core network 120. However, in other embodiments, the first servers 150_1, 150_2, ..., 150_n are communicatively connected to a second server 110 through a wireless communications link, e.g. based on a cellular protocol (e.g. a 3GPP 2G, 3G, 4G or 5G protocol), on a WIFI protocol or on a WiMAX protocol.

Back to Figure 1, a terminal equipment 100 (e.g. a smartphone or a tablet) is communicatively connected to one or more of the first servers 150_1, 150_2, ..., 150_n in order to access an application 150app (e.g. a web-application) executed on a respective first server 150_1 or 150_2 or ... or 150_n. In the present embodiment, the communication between the terminal equipment 100 and the core network 120 goes through a base station 130 belonging to a wireless communications link, e.g. based on a cellular protocol (e.g. a 3GPP 2G, 3G, 4G or 5G protocol), on a WIFI protocol or on a WiMAX protocol. However, in other embodiments, such communication between the terminal equipment 100 and the core network 120 goes through a wired communications link, e.g. a xDSL communications link implementing an internet protocol.

Back to Figure 1, intentionally or not, such terminal equipment 100 may infect the application 150app executed on a respective first server 150_1 or 150_2 or ... or 150_n. In order to protect the application 150app from such threat (e.g. one of the Open Worldwide Application Security Project, OWASP, identified threats), an application protection agent 150apa of a RASP type is associated to the application 150apa in the respective first server 150_1 or 150_2 or ... or 150_n.

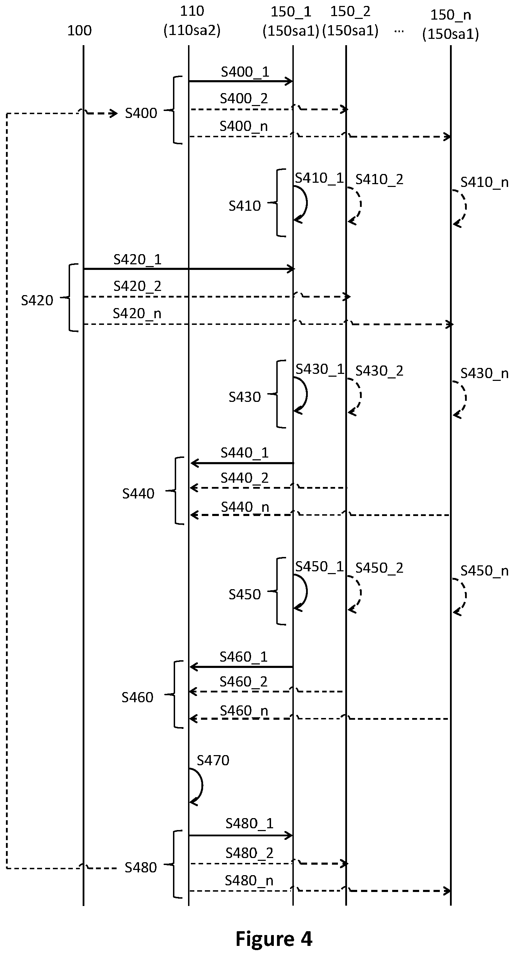

However, as discussed above in relation with the "technological background" section, such RASP is hard to implement and to operate. In order to improve the security of the application 150app, the first servers 150_1, 150_2, ..., 150_n implement a first security agent 150sa1 and the second server 110 implement a second security agent 110sa2 according to the present disclosure. Indeed, as detailed below in relation with Figure 4, the implementation of the first security agent 150sa1 in the first servers 150_1, 150_2, ..., 150_n wherein an application 150app is implemented in allows receiving (e.g. through polling of the respective application protection agents 150apa) information indicative that a threat has been detected in a respective application 150app. Such information can be sent to the second security agent 110sa2 for further actions to be taken for protecting such application 150app, thus improving the security of said application 150app.

More particularly, for improving the security of an application 150app, the first security agent 150sa1 executes some steps of the method for securing at least one application associated to an application protection agent as detailed below in relation with Figure 4 (in the various embodiments disclosed below in relationship with Figure 4). For that, a first electronic device 150ed comprises means configured for executing the first security agent 150sa1, and in particular for executing all or part of the steps of the method for securing at least one application associated to an application protection agent, as detailed below in relation with Figure 4 (in the various embodiments disclosed below in relationship with Figure 4), as executed by the first security agent 150sa1. More particularly, in some embodiments the first electronic device 150ed comprises **(****Figure 2****):**
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method described below (method for securing at least one application associated to an application protection agent) in the various embodiments disclosed below in relationship with Figure 4.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for securing at least one application associated to an application protection agent may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the first electronic device 150ed is implemented in one or more of the first servers 150_1, 150_2, ..., 150_n.

Back to Figure 1, for improving the security of the application 150app, the second security agent 110sa2 executes some steps of the method for securing at least one application associated to an application protection agent as detailed below in relation with Figure 4 (in the various embodiments disclosed below in relationship with Figure 4). For that, a second electronic device 150ed comprises means configured for executing the second security agent 110sa2, and in particular for executing all or part of the steps of the method for securing at least one application associated to an application protection agent, as detailed below in relation with Figure 4 (in the various embodiments disclosed below in relationship with Figure 4), as executed by the second security agent 110sa2. More particularly, in some embodiments the second electronic device 110ed comprises (Figure 3):
- a non-volatile memory 303 (e.g. a read-only memory (ROM), a hard disk, a flash memory, etc.);
- a volatile memory 301 (e.g. a random-access memory or RAM) and a processor 302.

The non-volatile memory 303 is a non-transitory computer-readable carrier medium. It stores executable program code instructions, which are executed by the processor 302 in order to enable implementation of some steps of the method described below (method for securing at least one application associated to an application protection agent) in the various embodiments disclosed below in relationship with Figure 4.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for securing at least one application associated to an application protection agent may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the second electronic device 110ed is implemented in the second server 110.

In some embodiments, only one first server 150_1 or 150_2 or ... or 150_n is connected to the second server 110 implementing the second security agent 110sa2. In some embodiments, a plurality of first servers 150_1 or 150_2 or ... or 150_n is connected to the second server 110 implementing the second security agent 110sa2. In other words, in the present description, depending on the considered embodiment the index n in the numeral references may be any natural integer, e.g. n = 1, 2, 3, etc.

Referring now to **Figure 4****,** we describe the steps of a method for securing at least one application 150app associated to an application protection agent 150apa according to one embodiment of the present disclosure and taking as an illustrative example the configuration discussed above in relation with Figure 1.

More particularly, in a **step S400,** the second security agent 110sa2 implemented in the second server 110 sends security rules to one or more of the first security agents 150sa1 implemented in the first servers 150_1, 150_2, ..., 150_n. Conversely, during the step S400, one or more of the first security agents 150sa1 implemented in the first servers 150_1, 150_2, ..., 150_n receive the security rules sent by the second security agent 110sa2. For instance:
- in step S400_1, the first security agents 150sa1 implemented in the first server 150_1 receives the security rules sent by the second security agent 110sa2;
- in step S400_2, the first security agents 150sa1 implemented in the first server 150_2 receives the security rules sent by the second security agent 110sa2;
- ...; and
- in step S400_n, the first security agents 150sa1 implemented in the first server 150_n receives the security rules sent by the second security agent 110sa2.

Such security rules allow the first security agents 150sa1 to program or update in a proactive way the application protection agent 150apa associated to the application 150app in the respective first server 150_1 or 150_2 or ... or 150_n. More generally, the step S400 can be executed whether in a proactive way (e.g. at any time) or in a reactive way (e.g after a detection of a threat happens. This can be the case e.g. after the execution of step S480 detailed below).

In a **step S410,** the first security agents 150sa1 that received security rules during step S400 send said security rules to the application protection agent 150apa implemented in the respective first server 150_1, 150_2, ..., 150_n. For instance:
- in step S410_1, the first security agents 150sa1 implemented in the first server 150_1 sends the security rules to the application protection agent 150apa associated to the application 150apa in the first server 150_1;
- in step S410_2, the first security agents 150sa1 implemented in the first server 150_2 sends the security rules to the application protection agent 150apa associated to the application 150apa in the first server 150_2;
- ...; and
- in step S410_n, the first security agents 150sa1 implemented in the first server 150_n sends the security rules to the application protection agent 150apa associated to the application 150apa in the first server 150_n.

In a **step S420,** the terminal equipment 100 is at the origin of an attack directed to at least one application 150apa implemented in a respective first server 150_1 or 150_2 or ... or 150_n (e.g. an attack corresponding to one of the threats identified by the OWASP). For instance:
- in step S420_1, the terminal equipment 100 is at the origin of an attack directed to the application 150apa implemented in the first server 150_1;
- in step S420_2, the terminal equipment 100 is at the origin of an attack directed to the application 150apa implemented in the first server 150_2;
- ...; and
- in step S420_n, the terminal equipment 100 is at the origin of an attack directed to the application 150apa implemented in the first server 150_n.

In a **step S430,** at least one first security agent 150sa1 implemented in a respective first server 150_1 or 150_2 or ... or 150_n wherein an application 150app is subject to an attack receives, from the respective application protection agent 150apa, respective at least one first information indicative that a threat has been detected in the application 150app by the application protection agent 150apa. For instance:
- in step S430_1, the first security agent 150sa1 implemented in the first server 150_1 receives, from the application protection agent 150apa implemented in the first server 150_1, at least one first information indicative that a threat has been detected in the application 150app executed on the first server 150_1 by said application protection agent 150apa;
- in step S430_2, the first security agent 150sa1 implemented in the first server 150_2 receives, from the application protection agent 150apa implemented in the first server 150_2, at least one first information indicative that a threat has been detected in the application 150app executed on the first server 150_2 by said application protection agent 150apa;
- ...; and
- in step S430_n, the first security agent 150sa1 implemented in the first server 150_n receives, from the application protection agent 150apa implemented in the first server 150_n, at least one first information indicative that a threat has been detected in the application 150app executed on the first server 150_n by said application protection agent 150apa.

For instance, the first information is representative that a threat has been detected in the respective application 150app by the application protection agent 150apa based on the security rules that have been uploaded during step S400 detailed above.

In a **step S440,** the at least one first security agent 150sa1 that received at least one first information during step S430 sends, to the second security agent 110sa2, the respective at least one first information. Conversely, during step S440, the second security agent 110sa2 receives, from the at least one first security agent 150sa1 that received at least one first information during step S430, the respective at least one first information. For instance:
- in step S440_1, the second security agent 110sa2 receives from the first security agent 150sa1 implemented in the first server 150_1, the at least one first information indicative that a threat has been detected in the application 150app executed on the first server 150_1;
- in step S440_2, the second security agent 110sa2 receives from the first security agent 150sa1 implemented in the first server 150_2, the at least one first information indicative that a threat has been detected in the application 150app executed on the first server 150_2;
- ...; and
- in step S440_n, the second security agent 110sa2 receives from the first security agent 150sa1 implemented in the first server 150_n, the at least one first information indicative that a threat has been detected in the application 150app executed on the first server 150_n.

In a **step S450,** at least one first security agents 150sa1 implemented in a respective first server 150_1, 150_2, ..., 150_n receives, from the respective application protection agent 150apa, respective at least one second information representative of an operation state of the respective application 150app and/or of an operation state of the respective application protection agent 150apa. For instance:
- in step S450_1, the first security agent 150sa1 implemented in the first servers150_1 receives, from the application protection agent 150apa implemented in the first server 150_1, at least one second information representative of an operation state of the application 150app executed on the first server 150_1 and/or of an operation state of said application protection agent 150apa;
- in step S450_2, the first security agent 150sa1 implemented in the first server 150_2 receives, from the application protection agent 150apa implemented in the first server 150_2, at least one second information representative of an operation state of the application 150app executed on the first server 150_2 and/or of an operation state of said application protection agent 150apa;
- ...; and
- in step S450_n, the first security agent 150sa1 implemented in the first server 150_n receives, from the application protection agent 150apa implemented in the first server 150_n, at least one second information representative of an operation state of the application 150app executed on the first server 150_n and/or of an operation state of said application protection agent 150apa.

For instance, the operation state is indicative that the respective application 150app and/or the respective application protection agent 150apa is still alive.

In some embodiments, the step S450 (and thus the steps S450_1, S450_2, ..., S450_n) is executed responsive to sending, by the first security agent 150sa1 to the respective application protection agent 150apa, a request for the respective at least one second information.

In some embodiments, said sending, to the respective application protection agent 150apa, a request for the respective at least one second information is executed periodically. For instance, the mechanism of sending the request and receiving the respective second information sent by the respective application protection agent 150apa is performed through a polling scheme.

Back to Figure 4, in a **step S460,** the at least one first security agent 150sa1 that received the respective at least one second information during step S430 send, to the second security agent 110sa2, said respective at least one second information. Conversely, during step S460, the second security agent 110sa2 receives, from the at least one first security agent 150sa1 that received respective at least one second information during step S430, said respective at least one second information. For instance:
- in step S460_1, the second security agent 110sa2 receives, from the first security agent 150sa1 implemented in the first server 150_1, the at least one second information representative of an operation state of the application 150app executed on the first server 150_1 and/or of an operation state of the application protection agent 150apa implemented in the first server 150_1;
- in step S460_2, the second security agent 110sa2 receives, from the first security agent 150sa1 implemented in the first server 150_2, the at least one second information representative of an operation state of the application 150app executed on the first server 150_2 and/or of an operation state of the application protection agent 150apa implemented in the first server 150_2;
- ...; and
- in step S460_n, the second security agent 110sa2 receives from the first security agent 150sa1 implemented in the first server 150_n, the at least one second information representative of an operation state of the application 150app executed on the first server 150_n and/or of an operation state of the application protection agent 150apa implemented in the first server 150_n.

Thus, the second security agent 110sa2 can decide actions to be taken for protecting the application 150app relying on more information about the application(s) 150app and/or the application protection agent(s) 150apa.

In a **step S470,** the second security agent 110sa2 analyzes the at least one first information received during execution of the step S440 (and thus the steps S440_1, S440_2, ..., S440_n), and the at least one second information received during execution of the step S460 (and thus the steps S460_1, S460_2, ..., S460_n). The execution of step S470 delivers a decision information indicative of a decision about the reality of the threat detected in relation with a given application 150app executed on a respective first server 150_1 or 150_2 or ... or 150_n.

Thus, false alarms can be avoided based on such analysis. For instance, the analysis implements a forensic analysis of the at least one first information and/or of the at least one second information.

However, in some embodiments, during step S470, the second security agent 110sa2 analyzes the at least one first information received during execution of the step S440 (and thus the steps S440_1, S440_2, ..., S440_n) only. In such embodiments, the steps S450 (and thus the steps S450_1, S450_2, ..., S450_n) and S460 (and thus the steps S460_1, S460_2, ..., S460_n) are not necessarily executed.

In some embodiments, during step S470, the second security agent 110sa2 analyzes the at least one second information received during execution of the step S460 (and thus the steps S460_1, S460_2, ..., S460_n) only. In such embodiments, the steps S430 (and thus the steps S430_1, S430_2, ..., S430_n) and S440 (and thus the steps S440_1, S440_2, ..., S440_n) are not necessarily executed.

In a **step S480,** the second security agent 110sa2 sends, for at least one first server 150_1 or 150_2 or ... or 150_n for which it has been decided during step S470 that there is a threat associated to an application 150app executed on said first server:
- to a network protection agent (e.g. the network protection agent is an API gateway or a firewall) of said first server 150_1 or 150_2 or ... or 150_n; or
- to an operating system operating the application 150app in said first server 150_1 or 150_2 or ... or 150_n,
an alert information indicative that a threat has been detected in the respective application 150app. This allows the network protection agent or the operating system to put in place additional protection mechanisms or to trigger them automatically (e.g. based on automated Security Orchestration and Response (SOAR) capabilities in an API).

In some embodiments, the step S470 is not executed. In such embodiments, during the step S480, the second security agent 110sa2 sends at least one alert information responsive to receiving a respective at least one first information (step S440 (and thus the steps S440_1, S440_2, ..., S440_n)) and/or a respective at least one second information (step S460 (and thus the steps S460_1, S460_2, ..., S460_n)). In those embodiments, the step S480 is executed responsive:
- to the execution of step S440 (and thus the steps S440_1, S440_2, ..., S440_n), i.e. when the second security agent 110sa2 receives at least one first information sent by the first security agent 150sa1 implemented in a respective first server 150_1 or 150_2 or ... or 150_n; and/or
- to the execution of step S460 (and thus the steps S460_1, S460_2, ..., S460_n), i.e. when the second security agent 110sa2 receives at least one second information sent by the first security agent 150sa1 implemented in a respective first server 150_1 or 150_2 or ... or 150_n.

More particularly, the second security agent 110sa2 sends at least one alert information to a network protection agent or to an operating system operating executed by a respective first server 150_1 or 150_2 or ... or 150_n that implements a first security agent 150sa1 that sent at least one first information (during step S440) and/or at least one second information (during step S460).

In some embodiments, the step S400 is executed responsive to the execution of the step S480. In such embodiments, the security rules are updated in the application protection agent 150apa in a reactive way, i.e. after detection of a threat.

In some embodiments, a same application 150app is executed on a plurality of first servers 150_1, 150_2, ..., 150_n. In such case, when a threat is detected by the second security agent 110sa2, the solution can be deployed at the same time in all or part of the first servers of the plurality of first servers 150_1, 150_2, ..., 150_n, even if only part of the first security agent 150sa1 sent first information and/or second information to the second security agent 110sa2. This improves the overall protection process associated to an application 150app of a given type executed by different servers.

## Claims

1. Method for securing at least one application (150app) operated in a first server (150_1, 150_2, 150c) communicatively connected to a second server (110), an application protection agent (150apa) of a run-time application self-protection, hereafter RASP, type, being associated to the application in the first server, a second security agent (110sa2) being implemented in the second server,
**characterized in that** a first security agent (150sa1) implemented in the first server executes:
- receiving (S430), from the application protection agent, at least one first information indicative that a threat has been detected in the application by the application protection agent; and
- sending (S440), to the second security agent, the at least one first information.

2. Method according to claim 1, wherein the first security agent executes:
- receiving (S450), from the application protection agent, at least one second information representative of an operation state of the application and/or of an operation state of the application protection agent.

3. Method according to claim 2, wherein said receiving, from the application protection agent, at least one second information is executed responsive to sending, to the application protection agent, a request for said at least one second information.

4. Method according to claim 2 or 3, wherein said sending, to the application protection agent, a request for said at least one second information is executed periodically.

5. Method according to any of the claims 2 to 4, wherein the first security agent executes:
- sending (S460), to the second security agent, the at least one second information.

6. Method according to any of the claims 1 to 5, wherein the first security agent executes:
- receiving (S400), from the second security agent, security rules; and
- sending (S410), to the application protection agent, the security rules,
and wherein the at least one first information is indicative that a threat has been detected in the application by the application protection agent based on the security rules.

7. Method for securing at least one application (150app) operated in a first server (150_1, 150_2, 150c) communicatively connected to a second server (110), an application protection agent (150apa) of a run-time application self-protection, hereafter RASP, type, being associated to the application in the first server, a first security agent (150sa1) being implemented in the first server,
**characterized in that** a second security agent (110sa2) implemented in the second server executes for said at least one application:
- receiving (S440), from the first security agent, at least one first information indicative that a threat has been detected in the application by the application protection agent; and
- sending (S480), to a network protection agent of the first server or to an operating system operating the application, an alert information indicative that a threat has been detected in the application.

8. Method according to claim 7, wherein the second security agent executes:
- receiving (S460), from the first security agent, at least one second information representative of an operation state of the application and/or of an operation state of the application protection agent.

9. Method according to claim 7 or 8, wherein the second security agent executes:
- analyzing (S470) the at least one first information and/or the at least one second information delivering a decision information indicative of a decision about the reality of the threat in the application,
and wherein said sending an alert information is executed when the decision information is indicative that it has been decided that the threat in the application is real.

10. Method according to any of the claims 7 to 9, wherein the second security agent executes:
- sending (S400), to the first security agent, security rules,
and wherein the at least one first information is indicative that a threat has been detected in the application by the application protection agent based on the security rules.

11. Computer program product **characterized in that** it comprises program code instructions for implementing a method according to at least one of the claims 1 to 10, when said program is executed on a computer or a processor.

12. Device (100ed) for securing at least one application (150app) operated in a first server (150_1, 150_2, 150c) communicatively connected to a second server (110), an application protection agent (150apa) of a run-time application self-protection, hereafter RASP, type, being associated to the application in the first server, a second security agent (110sa2) being implemented in the second server,
**characterized in that** it comprises a processor (202) or a dedicated computing machine configured for executing, when implemented in the first server:
- receiving, from the application protection agent, at least one first information indicative that a threat has been detected in the application by the application protection agent; and
- sending, to the second security agent, the at least one first information.

13. Device (150ed) for securing at least one application (150app) operated in a first server (150_1, 150_2, 150c) communicatively connected to a second server (110), an application protection agent (150apa) of a run-time application self-protection, hereafter RASP, type, being associated to the application in the first server, a first security agent (150sa1) being implemented in the first server,
**characterized in that** it comprises a processor (302) or a dedicated computing machine configured for executing, for said at least one application, when implemented in the second server:
- receiving, from the first security agent, at least one first information indicative that a threat has been detected in the application by the application protection agent; and
- sending, to a network protection agent of the first server or to an operating system operating the application, an alert information indicative that a threat has been detected in the application.

14. Server comprising a device according to claim 12 or 13.
